# EUROPÄISCHE PATENTANMELDUNG

(11) **EP 0 940 950 A2**
(43) Veröffentlichungstag der Anmeldung: **08.09.1999**
(21) Anmeldenummer: 99104490.0
(22) Anmeldetag: 05.03.1999
(51) Int. Cl.: H04L 12/40

(54) **Interface für einen Datenknoten eines Datennetzes**

(30) Priorität: 06.03.1998 DE 19809726
(71) Anmelder: STMicroelectronics GmbH, 85630 Grasbrunn (DE); Bayerische Motoren Werke Aktiengesellschaft, 80809 München (DE)
(72) Erfinder: Heinrich, Peter, 83024 Rosenheim (DE); Kuhls, Burkhard, 81673 München (DE)
(74) Vertreter: Klunker . Schmitt-Nilson . Hirsch

(57) **Zusammenfassung**

Interface (IF) für einen Datenknoten (DK) eines Datennetzes, das eine Mehrzahl von mittels einer Busleitung (13) miteinander verbundenen Datenknoten (DK) aufweist, die mittels über die Busleitung (13) geschickter Adressencodes selektiv aktivierbar sind, wobei das Interface (IF) ein Aktivierungsadressenfilter (AF) aufweist, mittels welchem für den zugehörigen Datenknoten (DK) bestimmte Aktivierungsbefehle erkennbar sind.

## Beschreibung

Die Erfindung betrifft ein Interface für einen Datenknoten eines Datennetzes, einen mit einem solchen Interface ausgestatteten Datenknoten und ein derartige Datenknoten umfassendes Datennetz.

Die Datenknoten eines derartigen Datennetzes kommunizieren miteinander über eine sie verbindende Busleitung, wobei jeder Datenknoten Sender oder Empfänger sein kann.

Derartige Datennetze werden seit einiger Zeit auch in Kraftfahrzeugen verwendet, wo sie unter dem Begriff CAN (Car Area Network) bekannt sind. Derartige CAN-Systeme umfassen zwei offene oder ringleitungsartige Gemeinschaftsleitungen, nämlich eine Busleitung für Daten- und Nachrichtenübertragung und eine Spannungsversorgungsleitung zur Versorgung der einzelnen Knoten mit einer Batteriespannung.

Die einzelnen Datenknoten umfassen üblicherweise eine Datenverarbeitungseinheit, insbesondere in Form eines Mikrocontrollers, und eine Spannungsversorgungseinheit, insbesondere in Form eines Spannungsreglers, wobei sowohl der Mikrocontroller als auch der Spannungsregler über ein Interface mit der Busleitung beziehungsweise der Spannungsversorgungsleitung gekoppelt sind.

Sowohl der Spannungsregler als auch besonders der Mikrocontroller verbrauchen im Aktivzustand relativ viel Strom. Dies führte bei einem Datennetz, dessen Datenknoten sich alle im Aktivzustand befinden, zu einem entsprechend hohen Verbrauch elektrischer Energie. Dies würde zu einer relativ raschen Entleerung der Fahrzeugbatterie führen, wenn das Fahrzeug für längere Zeit nicht benutzt wird. Diesem Problem begegnet man herkömmlicherweise dadurch, daß die einzelnen Datenknoten dann, wenn ihre Aktivität nicht benötigt wird, in einen Ruhezustand geschaltet werden und aus diesem Ruhezustand nur dann in einen Aktivzustand gebracht werden, wenn ihre Aktivität benötigt wird. Beispielsweise werden bei einem stehenden Fahrzeug, insbesondere wenn es mit einem Alarmsystem ausgerüstet ist, zyklisch die Türkontakte überprüft. Für dieses Aktivieren von Datenknoten wird üblicherweise der Ausdruck Aufwecken verwendet.

Bei herkömmlichen CAN-Systemen werden dann, wenn von einem Datenknoten Daten über die Busleitung gesendet werden, alle Datenknoten vollständig aufgeweckt. In jedem Datenknoten wird dabei über dessen Interface der Spannungsregler aktiviert, um von der Spannungsversorgungsleitung die Betriebsspannung abzunehmen und den Mikrocontroller durch Zuführung von Versorgungsspannung in aktiven Betrieb zu setzen.

Eine von einem Datenknoten über die Busleitung gesendete Nachricht enthält einen Adressenteil und einen Datenteil. Der Adressenteil enthält die Adressen der Datenknoten, die mit der jeweils gesendeten Nachricht angesprochen werden sollen. Dabei kann eine Adresse ausschließlich für einen einzigen Datenknoten oder für eine vorbestimmte Auswahl von Datenknoten bestimmt sein.

Die einzelnen Datenknoten sind mit Adressenfiltern ausgerüstet, mittels welchen sie erkennen können, ob es sich bei der Adresse der über die Busleitung gesendeten Nachricht um eine für sie bestimmte Adresse handelt oder nicht.

Eine derartige Adressenselektion oder Adressenfilterung kann beispielsweise mit Schaltungsanordnungen und Verfahren durchgeführt werden, wie sie in den eigenen deutschen Patentanmeldungen 196 45 055.1 und 196 45 057.8 angegeben sind, deren Inhalte hiermit durch Bezugnahme zum Offenbarungsgehalt der vorliegenden Patentanmeldung gemacht werden. Bei solchen Adressenselektionsverfahren werden entweder die gesamte Adressenbitfolge auf einmal oder einzelne Segmente vorbestimmter Länge der Adressenbitfolge mit Adressenwörtern beziehungsweise Adressensegmenten verglichen, die in dem jeweiligen Datenknoten gespeichert sind. Sollen von einem Datenknoten mehrere verschiedene Adressencodes akzeptiert werden können, wird entweder eine der Anzahl der zu akzeptierenden Adressen bzw. Adressensegmente entsprechende Anzahl Adressenfilter benötigt oder man verwendet zusätzlich zu den Filtern Masken, mittels welchen für die einzelnen Filterbitstellen festgelegt wird, ob für sie eine Akzeptanz einer empfangenen Adressenbitstelle nur dann stattfinden soll, wenn das Adressenbit der entsprechenden Adressenbitstelle mit der zugehörigen Filterbitstelle übereinstimmt, oder ob eine Akzeptanz unabhängig davon stattfinden soll, ob hinsichtlich der jeweils betrachteten Adressenbitstelle Übereinstimmung mit der zugehörigen Filterbitstelle besteht oder nicht.

Bei herkömmlichen CAN-Systemen findet die Adressenfilterung im Mikrocontroller statt. Wenn von einem Datenknoten Daten gesendet werden, werden sämtliche Datenknoten voll aufgeweckt, um den Mikrocontroller eines jeden Datenknotens durch Aktivierung in die Lage zu versetzen, die Adressenfilterung durchzuführen und damit zu bestimmen, ob die das Aufwecken verursachende Nachricht auf der Busleitung für den betrachteten Datenknoten bestimmt ist oder nicht. Da die Spannungsregler und insbesondere die Mikrocontroller im Aktivzustand relativ viel elektrische Energie verbrauchen, führt selbst eine Betriebsart, bei welcher die Datenknoten bei ruhendem Fahrzeug in einen Ruhezustand versetzt und nur ab und zu, und zwar meist zyklisch, in den Aktivzustand aufgeweckt werden, noch zu einem relativ hohen Energieverbrauch und entsprechend hoher Belastung der Fahrzeugbatterie. Wird ein solches Fahrzeug für längere Zeit abgestellt, beispielsweise auf einem Flughafenparkplatz während einer längeren Flugreise, kann die Fahrzeugbatterie durch ein solches zyklisches Aufwecken aller Datenknoten schon nach Zeiträumen von 1 bis 2 Wochen entladen sein.

Der Erfindung liegt die Aufgabe zugrunde, hier Abhilfe zu schaffen und insbesondere für CAN-Systeme eine Methode bereitzustellen, welche zu geringerem Energieverbrauch und damit zu länger dauernder Energieversorgungsfähigkeit der Fahrzeugbatterie auch bei länger dauernden Betriebspausen des Fahrzeugs führt.

Diese Aufgabe wird erfindungsgemäß dadurch gelöst, daß das Interface eines jeden Datenknotens mit einem Aktivierungsadressenfilter ausgerüstet ist, so daß die Adressenfilterung für einen über die Busleitung gesendeten Aktivierungsbefehl zur selektiven Aktivierung oder Aufweckung von Datenknoten bereits im Interface durchgeführt werden kann. Dadurch wird die Notwendigkeit beseitigt, zur Aktivierungsadressenfilterung den gesamten Datenknoten, insbesondere den Mikrocontroller, aufzuwecken und in den energieverbrauchenden Aktivzustand zu schalten.

Die Interfaces der einzelnen Datenknoten benötigen erheblich weniger elektrische Energie als der Mikrocontroller. Zudem kann man die Interfaces in einem Niederleistungsstatus halten, wenn keine Daten über die Busleitung übertragen werden. Wird ein Aktivierungsbefehl über den Bus geschickt, werden bei dieser Ausführungsform die Interfaces aller Knoten in einen die Aktivierungsadressenfilterung oder Aktivierungsadressenidentifizierung ermöglichenden Aktivstatus versetzt. In diesem Status überprüfen alle Interfaces, ob im Adressenteil der über die Busleitung gesendeten Nachricht eine für sie bestimmte Aktivierungsadresse enthalten ist.

Erst wenn ein Interface eine für seinen Datenknoten bestimmte Aktivierungsadresse erkennt, betreibt es die Aktivierung des zugehörigen Datenknotens, beispielsweise durch Aktivierung des zu diesem Datenknoten gehörigen Spannungsreglers, und damit das Aufwecken des zugehörigen Mikrocontrollers in dessen Aktivzustand.

Das Aufwecken der Interfaces in ihren Zustand, in dem sie die Aktivierungsadressenidentifizierung oder -filterung durchführen können, geschieht vorzugsweise mittels eines charakteristischen Rahmenstartbits, das den Nachrichtenrahmen einer jeden über die Busleitung gesendeten Nachricht einleitet.

Die Programmierung des Interface eines Datenknotens hinsichtlich der von ihm zu erkennenden Adresse oder Adressen kann vom zugehörigen Mikrocontroller bewirkt werden.

Da die Mikrocontroller herkömmlicher CAN-Systeme ein eigenes Adressenfilter aufweisen, kann die Korrektheit der vom zugehörigen Interface durchgeführten Adressenidentifizierung nach dem Aufwecken des Mikrocontrollers von diesem nochmals überprüft werden. Man kann allerdings auch bei Mikrocontrollern, die speziell für ein Datennetz mit erfindungsgemäßen Interfaces bestimmt sind, den Adressenidentifizierungsteil weglassen, da eine Adressenfilterung ja bereits in dem vorgeschalteten Interface stattfindet.

Bei einer bevorzugten Ausführungsform sind die einzelnen Interfaces nicht nur durch das Beginnen eines Nachrichtenrahmens in ihren Aktivzustand weckbar sondern zusätzlich durch ein externes Wecksignal. Letzteres kann beispielsweise zum Tragen kommen, wenn ein Datenknoten zu einem der zentralverriegelbaren Türschlüsser gehört und das Türschloß dieses Knotens zum Öffnen oder Schließen dieser Tür betätigt wird. Dies bewirkt, daß der zu diesem Türschloß gehörende Datenknoten über das externe Wecksignal aktiv geschaltet wird und daß dieser Datenknoten an die den anderen Türschlössern zugeordneten Datenknoten über die Busleitung eine entsprechende Aktivierungsnachricht schickt, um auch hinsichtlich dieser weiteren Türschlösser ein Öffnen bzw. Schließen zu veranlassen.

Bei einer bevorzugten Ausführungsform, die unabhängig davon, ob ein Interface eines Datenknotens mit eigenem Adressenfilter ausgerüstet ist oder nicht, selbständigen Erfindungswert hat, umfaßt das Interface eine Bittaktrückgewinnungseinrichtung, mittels welcher aus über die Busleitung empfangenen Bitfolgen der Bittakt rekonstruiert werden kann. Die Interfaces der CAN-Systeme sind üblicherweise mit einem eigenen Oszillator ausgerüstet, bei dem es sich einerseits aus Kostengründen und andererseits unter dem Aspekt niedrigen Energieverbrauchs um Oszillatoren relativ geringer Frequenzstabilität handelt, beispielsweise RC-Oszillatoren. Verwendet man hierfür nachstimmbare Oszillatoren, kann man diese mit Hilfe des rückgewonnenen Bittaktes mit diesem Bittakt synchronisieren.

Bei einer besonders bevorzugten Ausführungsform einer solchen Bittaktrückgewinnungseinrichtung wird ein Bitlängenzähler verwendet, dem als Zähltakt das Oszillatorsignal des Interface-Oszillators zugeführt wird und dem die Bitwechselstellen der empfangenen Bitfolge gemeldet werden. Der während der Dauer des Startbits des jeweiligen Nachrichtenrahmens erreichte Zählwert des Bitlängenzählers wird in einem Bitlängenspeicher festgehalten und dessen Speicherwert entspricht der Länge des Startbits. Nach dieser Bitlängenspeicherung wird der Bitlängenzähler jedesmal, wenn sein Zählwert entweder den im Bitlängenspeicher gespeicherten Zählwert erreicht hat oder wenn ihm gemeldet wird, daß in der empfangenen Bitfolge eine Anfangsflanke eines neuen Bit aufgetreten ist, rückgesetzt und fängt dann wieder von neuem zu zählen an. Bei jedem Rücksetzvorgang wird am Ausgang des Bitlängenzählers ein Bitwechselsignal abgegeben und diese Bitwechselsignale stellen den rückgewonnenen Bittakt dar.

Übliche Mikrocontroller weisen einen eigenen Oszillator hoher Frequenzstabilität, im allgemeinen einen Quarzoszillator, auf. Solche Oszillatoren haben nicht nur einen eigenen Energiebedarf sondern sie sind auch relativ teuer. Bei einer Ausführungsform der Erfindung, die auch unabhängig davon, ob das Interface des jeweiligen Datenknotens mit einem eigenen Adressenfilter und/oder einer Bittaktrückgewinnungseinrichtung versehen ist, selbständigen Erfindungswert hat, weisen die Mikrocontroller der einzelnen Datenknoten keine eigenen Oszillatoren auf sondern werden die Mikrocontroller mittels eines Taktes gesteuert, der mittels eines steuerbaren Oszillators gewonnen wird, der unter der Steuerung charakteristischer Größen steht, die über die Busleitung übertragen werden. Hierzu kann man den im zugehörigen Interface rückgewonnenen Bittakt der jeweils übertragenen Bitfolge verwenden oder auf die Rahmenlänge oder Rahmenteillängen über die Busleitung übertragener Nachrichtenrahmen oder zyklisch übertragener spezieller Frequenzsynchronisationsrahmen zurückgreifen.

Bei einer bevorzugten Ausführungsform dieser Erfindung verwendet man einen Rahmenlängenzähler, dem als Zähltakt das Oszillatorausgangssignal eines steuerbaren Oszillators direkt oder nach Herabteilung mittels eines Teilers zugeführt wird, wobei ein Zählvorgang des Rahmenlängenzählers vom Rahmenstartbit des betreffenden Nachrichten- bzw. Oszillatorsynchonisationsrahmens ausgelöst wird. Der am Rahmenende vom Rahmenlängenzähler erreichte Zählwert stellt den jeweiligen Rahmenlängenistwert dar. Mittels einer Vergleichseinrichtung wird dieser Rahmenlängenistwert mit einem Rahmenlängensollwert verglichen und mit Hilfe der sich gegebenenfalls aus diesem Vergleich ergebenden Abweichung des Rahmenlängenistwertes vom Rahmenlängensollwert wird der steuerbare Oszillator nachgestimmt.

Bei Systemen, deren übertragene Bitfolgen unterschiedliche Rahmenlängen aufweisen können, kann man einen Bitzähler zu Hilfe nehmen, der beginnend mit dem jeweiligen Rahmenstartbit eine vorbestimmte Anzahl Bits zählt, beispielsweise unter Verwendung der rückgewonnenen Bittakte, wobei das Ergebnis des Vergleichs zwischen dem Rahmenlängenistwert und dem Rahmenlängensollwert zu dem Zeitpunkt zur Nachstimmsteuerung des steuerbaren Oszillators freigegeben wird, zu welchem der Bitzähler eine vorbestimmte Anzahl Bits seit dem Auftreten des Rahmenstartbits gezählt hat. Dieser vorbestimmte Bitzählwert ist gleich oder kleiner als die Bitzahl des kürzestmöglichen Rahmens der über das System übertragenen Bitfolgen.

Ein Interface gemäß einem ersten Erfindungsaspekt, nämlich mit eigenen Aktivierungsadressenfilter, ist in Anspruch 1 angegeben. Ein Interface gemäß einem zweiten Erfindungsaspekt, nämlich mit Bittaktrückgewinnung, ist in Anspruch 6 definiert. Ein Interface gemäß einem dritten Erfindungsaspekt, bei welchem aus einer charakteristischen Größe von über die Busleitung empfangenen Bitfolgen eine Taktgewinnung zur Steuerung der zugehörigen Datenverarbeitungseinheit, insbesondere des zugehörigen Mikrocontrollers, bewirkt wird, ist in Anspruch 10 angegeben. Ein Datenknoten mit derartigen Interfaces und ein Datennetz mit entsprechenden Datenknoten sind in den Ansprüchen 14 bzw. 20 angegeben. Vorteilhafte Weiterbildungen der einzelnen Erfindungsaspekte sind in abhängigen Ansprüchen definiert.

Die einzelnen Erfindungsaspekte sowie zugehörige weitere Aufgaben- und Vorteilsaspekte werden nun anhand von Ausführungsformen näher erläutert. In den zugehörigen Zeichnungen zeigen:
- Fig. 1: eine schematische Darstellung eines Beispiels eines Datennetzes mit Datenknoten und Interfaces, die erfindungsgemäß ausgebildet sein können;
- Fig. 2: eine Ausführungsform eines Datenknotens, der erfindungsgemäß ausgebildet sein kann;
- Fig. 3: eine Ausführungsform eines Adressenidentifizierungs- und Bittaktrückgewinnungsteils eines erfindungsgemäßen Interface;
- Fig. 4: einen Bittaktrückgewinnungsteil eines erfindungsgemäßen Interface;
- Fig. 5: beispielhafte Signalverläufe in erfindungsgemäßem Zusammenhang; und
- Fig. 6: eine Ausführungsform eines über eine Busleitung abstimmbaren Oszillators eines Datenknotens.

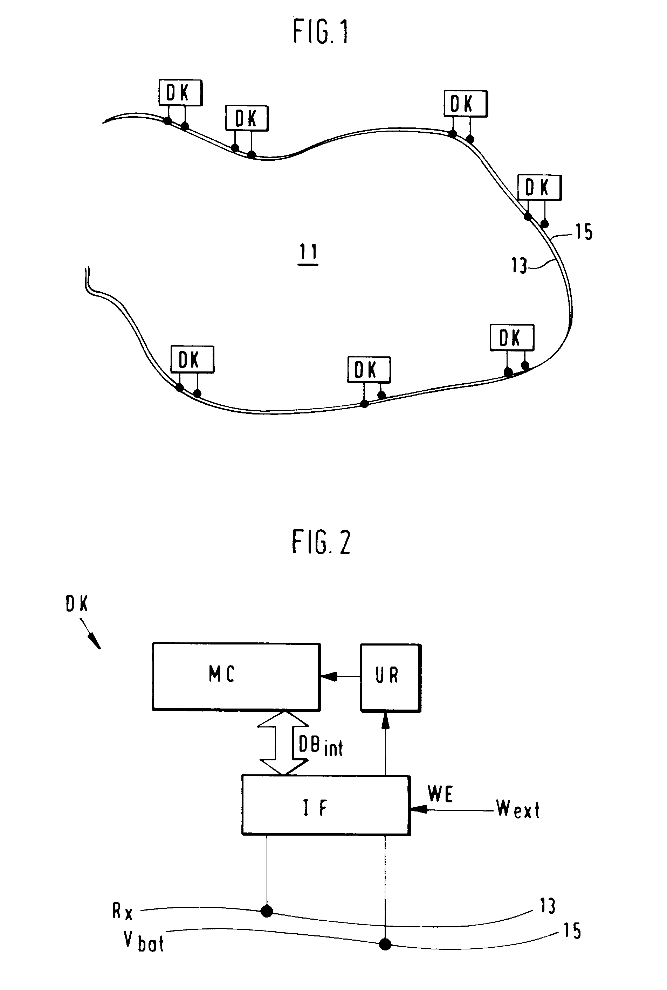

Ein in Fig. 1 dargestelltes Datennetz 11, beispielsweise CAN-Datennetz, umfaßt eine Mehrzahl Datenknoten DK, die datenmäßig über einen Datenbus 13 und energieversorgungsmäßig über eine Spannungsversorgungsleitung 15 ringartig miteinander verbunden sind. Dabei kann jeder Datenknoten DK die Funktion eines Senders oder die Funktion eines Empfängers annehmen.

Ein einzelner Datenknoten DK mit einer Datenverarbeitungseinheit in Form eines Mikrocontrollers MC, eines Spannungsreglers UR und eines Interface IF ist in Fig. 2 blockschaltmäßig gezeigt, wobei das Interface IF einerseits an den Datenbus 13 und andererseits an die Spannungsversorgungsleitung 15 angeschlossen ist. Das Interface IF steht mit dem Mikrocontroller MC über einen internen Datenbus DBint in Datenverbindung. Der Mikrocontroller MC wird von dem Spannungsregler UR mit Betriebsspannung versorgt, wenn das Interface IF eine Verbindung zwischen der Spannungsversorgungsleitung 15 und dem Spannungsregler UR freigibt. Eine derartige Freigabe bewirkt ein Aufwecken des Mikrocontrollers MC in dessen Aktivzustand, während der Mikrocontroller MC sich ansonsten im energiesparenden Ruhezustand befindet. Ein derartiges Aktivieren oder Aufwecken des Mikrocontrollers MC passiert entweder, wenn eine Aktivierungsadressenfiltereinrichtung des Interface IF erkannt hat, daß mit der Adresse einer über den Datenbus 13 geschickten Bitfolge der zugehörige Mikrocontroller aktiviert oder aufgeweckt werden soll, oder wenn dem Interface IF über einen Weckeingang WE ein externes Wecksignal Wext zugeführt wird.

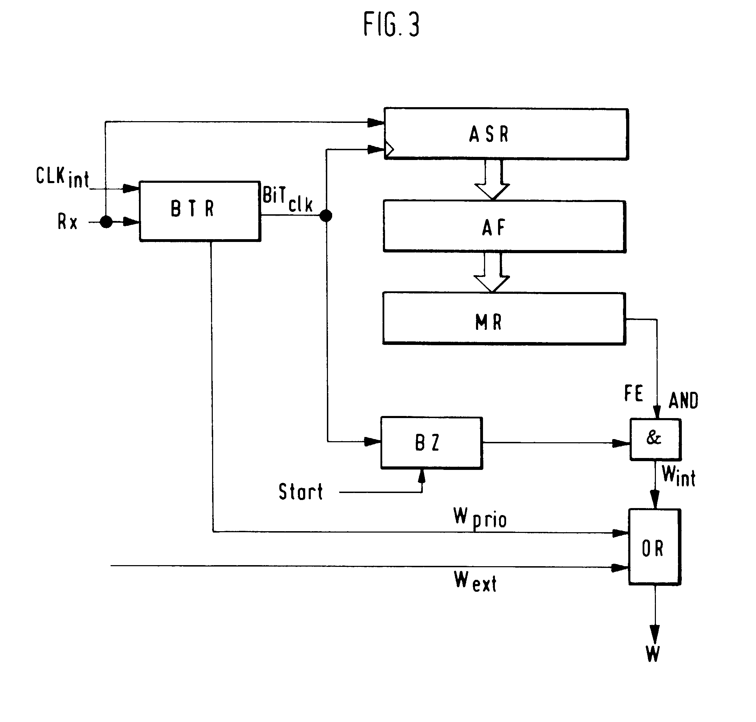

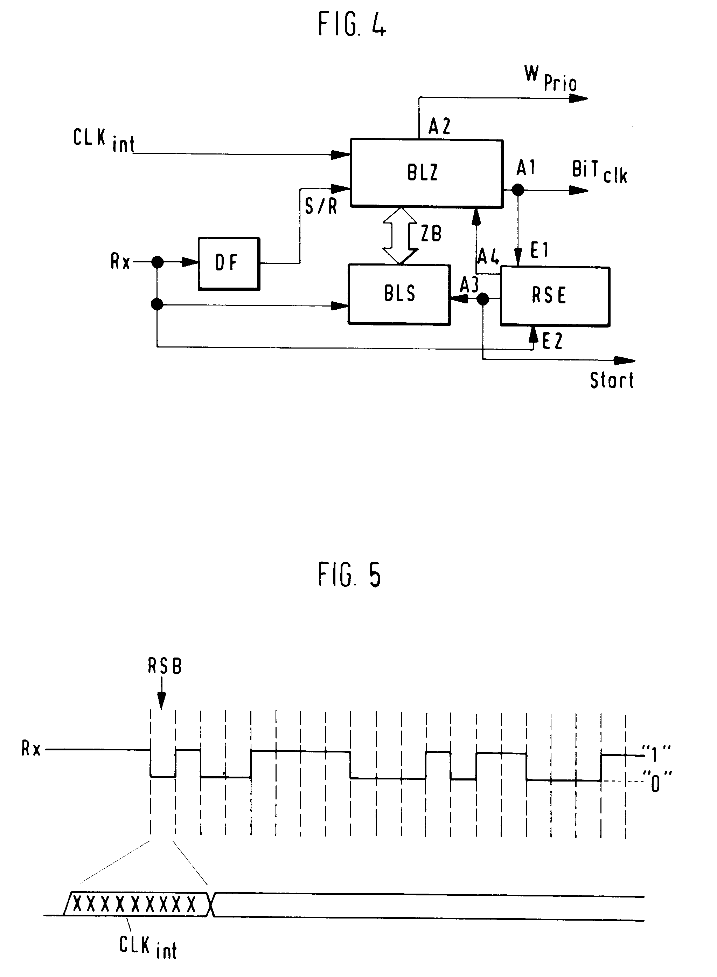

Ein Ausführungsbeispiel eines Adressenfilter- und Bittaktrückgewinnungsteils eines erfindungsgemäßen Interface ist in Blockschaltbilddarstellung in Fig. 3 gezeigt. Eine über den Datenbus 13 empfangene Bitfolge Rx wird einerseits auf eine Bittaktrückgewinnungseinrichtung BTR und andererseits auf einen Eingang eines Adressenschieberegisters ASR gegeben. Das Adressenschieberegister ASR weist eine Anzahl Schieberegisterstufen auf, die der Anzahl der Adressenbits eines über den Datenbus 13 geschickten Nachrichtenrahmens gleich ist. Wie anhand von Fig. 5 noch näher erläutert werden wird, beginnt jeder Nachrichtenrahmen mit einem den Adressenbits vorgestellten Rahmenstartbit RSB, das aus dem Adressenschieberegister ASR schon wieder herausgeschoben ist, wenn sich in ASR sämtliche Adressenbits des jeweiligen Nachrichtenrahmens befinden. Der Inhalt des Adressenschieberegisters ASR wird jeweils mit dem Inhalt eines Adressenfilters AF verglichen und das jeweilige Vergleichsergebnis wird mit Hilfe des Inhaltes eines Maskenregisters MR einer Maskierung der bereits erläuterten Art unterzogen. Eine Bewertung findet jeweils durch eine UND-Verknüpfung mit Hilfe eines UND-Gliedes AND statt, dessen Ausgangssignal je nachdem, ob der maskierte Vergleich der empfangenen Adressenbits mit den im Adressenfilter AF gespeicherten Adressenbits übereinstimmt oder nicht, einen ersten Logikwert, beispielsweise "0", bzw. einen zweiten Logikwert, beispielsweise "1", annimmt.

Die Darstellung des UND-Gliedes AND als einem Ausgang des Maskenregisters MR nachgeschalteter Funktionsblock ist in Fig. 3 lediglich funktional aufzufassen. Bei praktischen Schaltungen findet in Wirklichkeit eine Verknüpfung, beispielsweise eine mehrstufige Verknüpfung, des Speicherinhaltes des Adressenschieberegisters ASR, des Inhalts des Adressenfilters AF und des Inhalts des Maskenregisters MR statt, möglicherweise mit anderen oder zusätzlichen Verknüpfungsgliedern als dem in Fig. 3 symbolisch dargestellten UND-Verknüpfungsglied AND.

Näheres hierzu kann den vorausgehend erwähnten beiden Patentanmeldungen entnommen werden.

Mittels der Bittaktrückgewinnungseinrichtung BTR wird der Bittakt der Bitfolge des jeweils empfangenen Nachrichtenrahmens rückgewonnen. Damit können Bitwechsel auch für den Fall markiert werden, daß mehrere Bits gleichen Logik- oder Potentialwertes aufeinanderfolgen, zwischen derartigen benachbarten Bits somit keine detektierbaren Flankenwechsel auftreten.

Was die Adressenidentifizierung oder Adressenerkennung des Interface betrifft, ist hinsichtlich der Bittaktrückgewinnungseinrichtung BTR nur von Interesse, daß diese den Bittakt der empfangenen Bitfolge liefert. Mit Hilfe dieses Bittaktes wird einerseits das Einlesen der Adressenbits in das Adressenschieberegister ASR taktgesteuert und wird andererseits mittels eines Bitzählers BZ die Anzahl der bereits empfangenen Bits des jeweiligen Nachrichtenrahmens gezählt. Wenn der Bitzähler BZ, dessen Zählvorgang durch ein Startsignal ausgelöst wird, das mit Hilfe des Rahmenstartbits des jeweils empfangenen Nachrichtenrahmens erzeugt wird, eine Anzahl Bits gezählt hat, die gleich der Adressenbitzahl plus einem Rahmenstartbit ist, "weiß" der Bitzähler, daß sich im Adressenschieberegister ASR alle Adressenbits und nur die Adressenbits befinden müssen, und gibt zu diesem Zeitpunkt über seinen Ausgang ein Freigabesignal an einen Freigabeeingang FE des UND-Gliedes AND, wodurch dessen Auswertungsergebnis nur zu demjenigen Zeitpunkt freigegeben wird, zu welchem sich im Adressenschieberegister ASR sämtliche Adressenbits und nur diese befinden.

Erscheint zu diesem Freigabezeitpunkt am Ausgang des UND-Gliedes AND ein Logikwert, welcher signalisiert, daß die empfangene Adresse eine für den betrachteten Datenknoten DK bestimmte Adresse ist, wird dieser Potentialwert als internes Wecksignal Wint verwendet, um den zugehörigen Mikrocontroller vom Ruhezustand in den aktiven Zustand aufzuwecken.

Das interne Wecksignal Wint wird aber nicht direkt als Wecksignal weitergegeben sonder über ein ODER-Glied OR mit drei Eingängen, denen das interne Wecksignal Wint, ein Prioritätswecksignal Wprio bzw. das externe Wecksignal Wext zugeführt wird. Gelangt eines dieser drei Wecksignale auf das ODER-Glied OR, wird am Ausgang von OR ein Wecksignal W erzeugt, das zum Aktivieren des Spannungsreglers UR und damit zum Aktivieren des Mikrocontrollers MC führt.

Mit dem Prioritätswecksignal Wprio kann erreicht werden, daß über einen speziellen Inhalt der jeweils empfangenen Bitfolge sämtliche Datenknoten DK in einen Aktivzustand aufgeweckt werden. Bei der in Fig. 3 dargestellten Ausführungsform wird das Prioritätswecksignal Wprio mit Hilfe der Bittaktrückgewinnungseinrichtung BTR erzeugt. Einzelheiten hierzu werden nachfolgend im Zusammenhang mit den Figuren 4 und 5 erläutert.

Eine bevorzugte Ausführungsform einer Bittaktrückgewinnungseinrichtung BTR ist in Fig. 4 in Blockschaltbilddarstellung gezeigt. Diese umfaßt ein Differenzierglied DF, dem als zu differenzierendes Signal die empfangene Bitfolge Rx zugeführt wird, beispielsweise in Form der in Fig. 5 gezeigten Bitfolge. Bei jeder Impulsflanke dieser Bitfolge entsteht am Ausgang von DF ein negativer bzw. ein positiver Differenzierimpuls, der auf einen Zählstart/Zählerrücksetz-Eingang S/R eines Bitlängenzählers BLZ gegeben wird. Der Bitlängenzähler BLZ steht über einen Zwischenbus ZB in Datenaustausch mit einem Bitlängenspeicher BLS. Dem Bitlängenzähler BLZ werden zu zählende Taktimpulse CLKint von einem (nicht dargestellten) Oszillator des Interface IF dieses Datenknotens zugeführt. Die Schwingungsfrequenz dieses Oszillators ist beträchtlich höher als der Bittakt der über den Datenbus 13 gesendeten Bitfolgen Rx.

An einem ersten Ausgang A1 des Bitlängenzählers BLZ ist der rückgewonnene Bittakt BITclk verfügbar und an einem zweiten Ausgang A2 von BLZ kann gegebenenfalls das Prioritätswecksignal Wprio abgenommen werden.

Eine Rahmenstarterkennungseinrichtung RSE erhält über einen ersten Eingang E1 den rückgewonnenen Bittakt BITclk und über einen zweiten Eingang E2 die empfangene Bitfolge Rx. Mit RSE kann unter Auswertung des jeweiligen Rahmenstartbits und der Bittakte BITclk der jeweils empfangenen Bitfolge der Beginn eines Nachrichtenrahmens festgestellt werden. Bei der Feststellung eines Rahmenbeginns gibt die Rahmenstarterkennungseinrichtung RSE über die Ausgänge A3 und A4 je ein Rahmenstartsignal Start, mittels welchem bei Beginn eines Nachrichtenrahmens der Bitlängenzähler BLZ rückgesetzt und der Bitlängenspeicher BLS gelöscht werden. Das Signal Start wird außerdem zur Rücksetzung des Bitzählers BZ der in Fig. 3 gezeigten Adressenerkennungseinrichtung verwendet, das den Bitzähler BZ mit dem Beginn eines empfangenen Nachrichtenrahmens rücksetzt.

Unter Zuhilfenahme von Fig. 5 wird nun die Funktionsweise der in Fig. 4 gezeigten Bitrückgewinnungseinrichtung BTR erläutert.

Nach dem Protokoll der üblichen CAN-Datennetze befindet sich der Datenbus 13 zwischen den Nachrichtenrahmen auf einem konstanten Logikwert "1" und beginnt jeder Nachrichtenrahmen mit einem Rahmenstartbit RSB mit dem Logikwert "0". Dieses Protokoll schreibt außerdem vor, daß innerhalb eines Nachrichtenrahmens nicht mehr als eine vorbestimmte Anzahl, beispielsweise sechs, Bits gleichen Logikwertes aufeinanderfolgen dürfen. Wenn die Rahmenstarterkennungseinrichtung RSE aus der über E2 zugeführten Bitfolge Rx und/oder aus dem ihr über E1 zugeführten rückgewonnenen Bittaktsignal erkennt, daß mehr als die laut Protokoll vorgeschriebene Anzahl Bits gleichen Logikwertes aufeinanderfolgen, wird davon ausgegangen, daß sich das Datennetz zwischen oder außerhalb von Nachrichtenrahmen befindet. Wenn danach ein Logikwertwechsel auftritt, nämlich zum Logikwert "0" während des Rahmenstartbits RSB eines nun empfangenen Nachrichtenrahmens, erkennt dies die Rahmenstarterkennungseinrichtung RSE als Rahmenbeginn und bewirkt zu diesem Zeitpunkt ein Rücksetzen von BLZ und ein Löschen von BLS.

Der Flankenwechsel vom Logikwert "1" zum Logikwert "0", der zu Beginn eines Rahmenstartbits RSB auftritt, löst außerdem einen Zählstartimpuls am Ausgang des Differenziergliedes DF aus, der den Bitlängenzähler BLZ zum Zählen der ihm zugeführten internen Taktimpulse CLKint startet. Wenn bei der in Fig. 5 dargestellten Bitfolge am Ende des Rahmenstartbits RSB ein positiv gerichteter Flankenwechsel auftritt, löst dies am Ausgang des Differenziergliedes DF einen Zählstopp für den Bitlängenzähler BLZ aus. Gleichzeitig wird ein Einspeichern des zu diesem Zeitpunkt vom Bitlängenzähler BLZ erreichten Zählwertes in den Bitlängenspeicher BLS gesteuert, der diesen Zählwert für den Rest des laufenden Nachrichtenrahmens gespeichert hält.

Mit der Übergabe des am Ende von RSB erreichten Zählwertes an den Bitlängenspeicher BLS wird der Bitlängenzähler BLZ rückgesetzt und für einen neuen Zählvorgang gestartet. Bei jedem folgenden Flankenwechsel von RX wird der Bitlängenzähler BLZ erneut rückgesetzt und für einen neuen Zählvorgang gestartet. Da in einer Bitfolge eines Nachrichtenrahmens mehrere Bits gleichen Logikwertes aufeinanderfolgen können, wie es in Fig. 5 beispielsweise dargestellt ist, ist nicht an jeder Bitwechselstelle auch ein Flankenwechsel verfügbar, so daß der Bitlängenzähler BLZ im Falle derartiger aufeinanderfolgender gleicher Logikwerte nicht an der Bitwechselstelle rückgesetzt würde. Um auch die Bitwechselstellen zwischen aufeinanderfolgenden Bits gleichen Logikwertes erfassen zu können, wird der Zählwert von BLZ laufend mit den in BLS gespeicherten Zählwert verglichen und wird BLZ auch dann rückgesetzt, wenn er nach dem jeweiligen Zählstart einen Zählwert erreicht hat, der gleich dem im BLS gespeicherten Zählwert ist. Folglich kommt es zu Rücksetzungen von BLZ immer dann, wenn entweder mit Hilfe des Differenziergliedes DF ein Flankenwechsel der Bitfolge Rx festgestellt worden ist oder wenn BLZ einen Zählwert gleich dem im BLS gespeicherten Zählwert erreicht hat.

Bei jedem Rücksetzvorgang von BLZ erscheint an dessen Ausgang A1 ein Bittaktimpuls und die Folge dieser Bittaktimpulse stellt den rückgewonnenen Bittakt BITclk dar.

Mit Hilfe des laufenden Vergleichs des Zählwertes von BLZ mit dem in BLS gespeicherten Zählwert können somit Bitwechselstellen auch dann durch das Erscheinen von Bittaktimpulsen BITclk markiert werden, wenn keine Flankenwechsel stattfinden. Auf diese Weise können nicht nur die Bitwechselstellen innerhalb der Bitfolge eines gerade empfangenen Nachrichtenrahmens markiert werden, sondern die rückgewonnenen Bittakte können auch zwischen den Nachrichtenrahmen erzeugt werden, wenn die Bittaktrückgewinnungseinrichtung BTR derart gestaltet und gesteuert ist, daß der Speicherinhalt des Bitlängenspeichers BLS auch nach dem Ende eines Nachrichtenrahmens aufrechterhalten bleibt und dessen Löschung erst mit dem Beginn des Rahmenstartbits RSB eines nachfolgenden Nachrichtenrahmens erfolgt.

Bei der in Fig. 4 dargestellten Ausführungsform wird davon ausgegangen, daß der Bitlängenspeicher BLS selbst dazu in der Lage ist, den Beginn eines Rahmenstartbits zu erkennen. Eine andere Möglichkeit wäre die, den Bitlängenspeicher BLS das differenzierte Signal am Ausgang des Differenziergliedes DF auswerten zu lassen.

Die Rahmenstarterkennungseinrichtung RSE kann mit einem Zähler aufgebaut sein, der einerseits die Flanken von Rx erfassen kann (möglicherweise mit Hilfe der Ausgangssignale des Differenziergliedes DF) und der andererseits mit jeder dieser Flanken rückgesetzt und zu einem Zählvorgang gestartet wird, bei welchem er Taktimpulse eines vorgegebenen Taktes zählt, beispielsweise des rückgewonnenen Bittaktes BITclk. Übersteigt der jeweilige Zählwert von RSE einen Zählwert, der signalisiert, daß der letzte Flankenwechsel länger zurückliegt, als es nach dem Protokoll innerhalb der Bitfolge eines zulässigen Nachrichtenrahmens erlaubt ist, wird davon ausgegangen, daß eine Rahmenpause oder ein Rahmenzwischenraum vorliegt und daß es sich bei einem darauf folgenden Flankenwechsel um den Beginn eines Rahmenstartbits RSB handeln muß.

Das auf das Rahmenstartbit RSB folgende Bit ist das erste Adressenbit des jeweiligen Nachrichtenrahmens. Wenn dieses erste Adressenbit, anders als bei dem in Fig. 5 gezeigten Beispiel, den gleichen Logikwert "0" aufweist wie das Rahmenstartbit RSB, wird der mit dem Beginn von RSB ausgelöste Zählvorgang des Bitlängenzählers BLZ nicht am Ende von RSB gestoppt, weil zu diesem Zeitpunkt vom Differenzierglied DF kein Differenzierimpuls geliefert wird. Dies führt dazu, daß der Bitlängenzähler BLZ seinen Zählvorgang über das Ende von RSB hinaus fortsetzt und eine Übernahme des Zählwertes in den Bitlängenspeicher BLS erst erfolgt, wenn ein erster Flankenwechsel seit dem Beginn von RSB auftritt. Der Bitlängenzähler BLZ erreicht daher einen Zählwert, der - auch unter Berücksichtigung der Frequenzungenauigkeit des den internen Zähltakt CLK liefernden Interface-Oszillators - weit über dem Zählwert liegt, der am Ende des Rahmenstartbits RSB erreicht sein müßte. Diese Verhaltensweise wird gezielt für das Prioritätswecken ausgenutzt. Sollen Datenknoten nicht durch Erkennen von für sie bestimmten Adressen aufgeweckt werden sondern unabhängig von einer solchen Adressenerkennung, braucht von dem Datenknoten, der die anderen Datenknoten adressenunspezifisch aufwecken will, nur ein Datenrahmen gesendet zu werden, in dessen Bitfolge auf das Rahmenstartbit RSB mit dem Logikwert "0" ein erstes Adressenbit mit dem gleichen Logikwert "0" folgt. Dies führt bei den Bitlängenzählern der Interfaces aller Datenknoten zum Erreichen eines Zählwertes, welcher über dem Zählwert liegt, welcher am Ende eines Rahmenstartbits RSB erreicht werden kann. Richtet man nun den Bitlängenzähler BLZ des Interface eines jeden Datenknotens, der an einem Prioritätsweckvorgang beteiligt sein soll, so ein, daß beim Erreichen eines vorbestimmten Zählwertes, der auch unter Berücksichtigung eines frequenzungenauen Interface-Oszillators mit Sicherheit höher liegt als der am Ende eines Rahmenstartbits erreichbare Zählwert, über den Ausgang A2 ein Prioritätswecksignal Wprio abgegeben wird, kann man alle am Prioritätsweckverfahren beteiligten Datenknoten gemeinsam dadurch aufwecken, daß der sendende Datenknoten, der den Prioritätsweckvorgang auslösen will, einen Datenrahmen mit einer Bitfolge schickt, auf deren Rahmenstartbit RSB mit dem Logikwert "0" ein erstes Adressenbit folgt, das den gleichen Logikwert "0" aufweist.

Im üblichen Fall weist jeder Mikrocontroller MC einen eigenen Quarzoszillator hoher Frequenzstabilität auf, mit dem die Taktsteuerung des Mikrocontrollers vorgenommen wird. Da derartige Quarzoszillatoren relativ teuer sind, wäre es von Vorteil, die Taktsteuerung des jeweiligen Mikrocontrollers nicht von einem solchen eigenen Quarzoszillator abhängig zu machen sondern aus Sicht des Mikrocontrollers eine externe Taktsteuerung vorzunehmen.

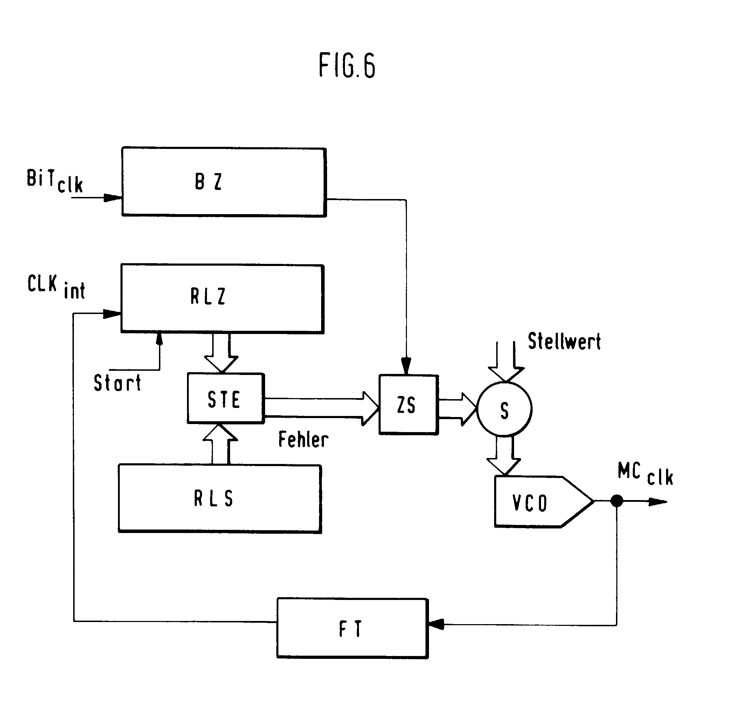

Eine Schaltungsanordnung, mit welcher so etwas möglich ist, ist in Fig. 6 in Blockschaltbilddarstellung gezeigt. Diese Schaltungsanordnung ermöglicht es, einen Interface-Oszillator mäßiger Frequenzgenauigkeit auf einen hohe Frequenzgenauigkeit aufweisenden Bittakt einer über den Datenbus empfangenen Bitfolge abzustimmen. Das Ausgangs-Signal des solchermaßen frequenzgenau gemachten Interface-Oszillators kann dann als Taktsteuersignal für den zugehörigen, keinen eigenen Oszillator aufweisenden Mikrocontroller verwendet werden.

Die in Fig. 6 gezeigte Schaltungsanordnung umfaßt einen spannungsgesteuerten Oszillator VCO, dessen Ausgangssignal das Taktsignal MCclk für den Mikrocontroller MC des betroffenen Datenknotens DK liefert. Beispielsweise erzeugt VCO eine Taktfrequenz von 10 MHz. Dieses Taktsignal MCclk wird auf einen Frequenzteiler FT mit einem vorbestimmten Frequenzteilerfaktor gegeben und an dessen Ausgang steht der interne Takt CLKint zur Verfügung. CLKint wird auf einen Zähleingang eines Rahmenlängenzählers RLZ gegeben, der einen Rücksetzeingang RESET aufweist, dem das Rahmenstartsignal Start von der Rahmenstarterkennungseinrichtung RES in Fig. 4 zugeführt wird, um den Rahmenlängenzähler RLZ mit dem Beginn eines jeden neuen Nachrichtenrahmens rückzusetzen. Außerdem ist ein Rahmenlängensollwertgeber RLS vorgesehen, in dem ein Zählwert entsprechend einer vorbestimmten Rahmensollänge festgelegt ist. Mittels einer Subtrahiereinrichtung STE wird der jeweilige Zählwert des Rahmenlängenzählers RLZ laufend mit dem Rahmenlängensollwert verglichen. Eine sich aus diesem Vergleich ergebende Differenz wird als FEHLER auf einen freigabeabhängigen Zwischenspeicher ZS gegeben und gelangt bei Freigabe von diesem auf eine Summierschaltung S. Mittels der Summierschaltung S wird zu einem Stellwert, der zur gewünschten Frequenz von VCO führt, wenn der von STE gelieferte Fehler gleich Null ist, der jeweilige tatsächliche Fehler hinzuaddiert und damit die Frequenz von VCO korrigiert.

Da der Rahmenlängenzähler RLZ jeweils nur vom Rahmenstartbit RSB rückgesetzt wird, also nach einer Zeitdauer, die über die Rahmenlänge hinausgeht, ist ein Bitzähler BZ vorgesehen, wofür auch der in Fig. 3 bereits vorhandene Bitzähler BZ Verwendung finden kann, mittels welchem eine vorbestimmte Rahmenlänge entsprechend einer vorbestimmten Anzahl Bits ab Rahmenanfang ausgezählt werden kann. Wenn die entsprechende Bitzahl bzw. Rahmenlänge erreicht ist, wird der Zwischenspeicher ZS freigegeben, um den dann vorhandenen FEHLER an die Summierschaltung S weiterzugeben. Wenn sämtliche Nachrichtenrahmen die gleiche Bitzahl und damit die gleiche Rahmenlänge aufweisen, kann der Bitzähler BZ so eingerichtet sein, daß er das Freigabesignal für den freigabeabhängigen Zwischenspeicher ZS jeweils am tatsächlichen Rahmenende liefert. Für den Fall, daß die über den Datenbus 13 gelieferten Nachrichtenrahmen unterschiedliche Rahmenlänge haben können, wird der Bitzähler BZ so eingerichtet, daß er ab der Rücksetzung durch das Rahmenstartbit RSB eine Bitzahl und damit Rahmenlänge zählt, die höchstens so groß ist, wie die kleinstmögliche Rahmenlänge aller möglichen Nachrichtenrahmen.

Die Abstimmung des gesteuerten Oszillators funktioniert folgendermaßen:

Für den Fall, daß VCO exakt seine Sollfrequenz liefert, paßt in die mit Hilfe des Bitzählers BZ definierte Rahmenlänge bzw. in den mittels BZ definierten Bewertungszeitraum (wenn dieser kürzer ist als eine tatsächliche Rahmenlänge) eine bestimmte Anzahl der Taktimpulse CLKint. Diese bestimmte Anzahl Taktimpulse führt zu einem bestimmten entsprechenden Zählwert des Rahmenlängenzählers RLZ am Ende der Rahmenlänge bzw. des Bewertungszeitraums. Im Rahmenlängensollwertgeber RLS ist ein exakt diesem Zählwert entsprechender Sollwert abgelegt. Hat VCO seine Sollfrequenz, ist der mit Hilfe von STE ermittelte Fehler gleich Null und wird VCO ausschließlich durch den Stellwert gesteuert. Weicht die Frequenz von VCO vom Frequenzsollwert ab, wird innerhalb der Rahmenlänge bzw. des Bewertungszeitraums von RLZ ein anderer Zählwert erreicht, als er in RLS abgelegt ist. Dies führt dann zu einem entsprechenden FEHLER und zu einer entsprechenden Abweichung des auf den Steuereingang von VCO gegebenen Steuersignals vom Stellwert. Dies führt zu einer entsprechenden Änderung der von VCO gelieferten Frequenz und damit des an den Mikrocontroller MC gelieferten Mikrocontrollertaktes MCclk.

Wenn auch nicht mehr alle Mikrocontroller des gesamten Datennetzes je einen eigenen Quarzoszillator benötigen, muß doch an irgendeiner Stelle des Gesamtsystems ein Quarzoszillator mit hoher Frequenzgenauigkeit vorhanden sein, der die Frequenz und damit die Taktrate für den gesamten Rest des Datensystems vorgibt. Zu diesem Zweck kann ein Datenknoten als Takt-Master vorgesehen und dessen Mikrocontroller mit einem Quarzoszillator versehen werden. Vorzugsweise wird der Takt-Master von jedem Wecksignal im gesamten Datennetz aufgeweckt und reagiert daraufhin mit dem (vorzugsweise mehrmaligen) Aussenden einer vorbestimmten Taktdefinitionsbitfolge auf den Datenbus 13. Das Rahmenstartbit dieser Taktdefinitionsbitfolge bringt die Interfaces aller Datenknoten in den Mitlesezustand, in welchem ihre Adressenfilter aktiv sind. Die Taktdefinitionsbitfolge ist nun derart gestaltet, daß ihr eine höhere Priorität zukommt als den Nachrichten, die von allen anderen Datenknoten als dem Takt-Master geliefert werden können. Dadurch wird sichergestellt, daß sich von dem Aussenden einer Taktdefinitionsbitfolge des Takt-Masters die Interfaces sämtlicher anderer Datenknoten angesprochen fühlen und in allen diesen Interfaces eine Frequenzsynchronisation stattfindet, wie sie anhand von Fig. 6 erläutert worden ist. Die Mikrocontroller dieser Datenknoten brauchen für diese Frequenznachstimmung nicht aufgeweckt zu werden.

Um die Synchronisation der Interface-Oszillatoren VCO aller dieser Datenknoten mit dem Takt des Takt-Masters sicherzustellen, wird das Datennetz vorzugsweise derart organisiert, daß während der Übertragung der Taktdefinitionsbitfolgen keine Nachrichten übertragen werden. Auch kann man durch entsprechende Gestaltung der Taktdefinitionsbitfolge und der Taktsynchronisationsschaltungen in den einzelnen Datenknoten erreichen, daß die Taktsynchronisationsschaltungen, beispielsweise der in Fig. 6 gezeigten Art, nur auf Taktdefinitionsbitfolgen ansprechen, nicht jedoch auf Nachrichtenbitfolgen.

Der Frequenzteiler FT in Fig. 6 sorgt dafür, daß der maximale Zählwert, für den der Rahmenlängenzähler RLZ ausgelegt werden muß, nicht zu hoch zu sein braucht und man daher mit einem kleineren, weniger Zählstufen enthaltenden Zähler auskommen kann.

## Patentansprüche

1. Interface (IF) für einen Datenknoten (DK) eines Datennetzes, das eine Mehrzahl von mittels einer Busleitung (13) miteinander verbundenen Datenknoten (DK) aufweist, die mittels über die Busleitung (13) geschickter Adressencodes selektiv aktivierbar sind, wobei das Interface (IF) ein Aktivierungsadressenfilter (AF) aufweist, mittels welchem für den zugehörigen Datenknoten (DK) bestimmte Aktivierungsbefehle erkennbar sind.

2. Interface nach Anspruch 1,
mit einem Adressenschieberegister (ASR) zur Zwischenspeicherung einer über die Busleitung (13) empfangenen Adressenbitfolge,
mit einem Filterregister (AF) zur Festspeicherung einer der Adresse des betrachteten Datenknotens (DK) entsprechenden Adressenbitfolge
und mit einer Vergleichseinrichtung (AND) zum Vergleichen der jeweils im Adressenschieberegister (ASR) gespeicherten Adressenbitfolge auf Übereinstimmung mit der im Filterregister (AF) gespeicherten Adressenbitfolge,
wobei die Vergleichseinrichtung (AND) ein Vergleichsergebnissignal erzeugt, das dann die Form eines Wecksignals (Wint) aufweist, wenn sie Übereinstimmung zwischen der zwischengespeicherten Adressenbitfolge und der festgespeicherten Adressenbitfolge feststellt.

3. Interface nach Anspruch 2,
mit einer Maske (MR), mittels welcher hinsichtlich vorbestimmter Adressenbitstellen Übereinstimmung zwischen zwischengespeicherter Adressenbitfolge und festgespeicherter Adressenbitfolge unabhängig davon signalisierbar ist, ob für eine solche Adressenbitstelle tatsächliche Übereinstimmung besteht oder nicht.

4. Interface nach Anspruch 2 oder 3,
bei welchem das Vergleichsergebnissignal der Vergleichseinrichtung (AND) nur bei Erhalt eines Freigabesignals freigebbar ist, und
mit einem Bitzähler (BZ), mit dem die Bitstellen der jeweils empfangenen Bitfolge zählbar sind und der beim Erreichen eines vorbestimmten Bitzählwertes an die Vergleichseinrichtung (AND) ein Freigabesignal liefert.

5. Interface nach einem der Ansprüche 2 bis 4,
bei welchem dem Ausgang der Vergleichseinrichtung (AND) ein ODER-Verknüpfungsglied (OR) nachgeschaltet ist, welches ein Ausgangssignal der Vergleichseinrichtung (AND) einer ODER-Verknüpfung mit einem externen Wecksignal (Wext) und/oder einem Prioritätswecksignal (Wprio) unterzieht.

6. Interface, insbesondere nach einem der Ansprüche 1 bis 5,
mit einer Bittaktrückgewinnungseinrichtung (BTR) zur Rückgewinnung des Bittaktes (BITclk) der über die Busleitung (13) empfangenen Bitfolgen (Rx).

7. Interface nach Anspruch 6 für Datenknoten (DK) eines Datennetzes, bei welchem über die Busleitung (13) Bitfolgen rahmenweise gesendet werden und jeder Rahmen mit einem charakteristischen Rahmenstartbit (RSB) beginnt, dem die Adressenbits und danach Datenbits folgen;
mit einem die Impulsflanken der jeweiligen Bitfolge zu Differenzierungsimpulsen erster beziehungsweise zweiter Polarität differenzierenden Differenzierglied (DF);
mit einem Bitlängenzähler (BLZ), dem Zähltaktimpulse (CLKint) eines Zähltaktoszillators als zu zählende Impulse zuführbar sind, dem die Differenzierungsimpulse der einen Polarität als Zählstartsignale und die Differenzierimpulse der anderen Polarität als Zählerrücksetzsignale zuführbar sind, der bei jedem Rücksetzvorgang ein den rückgewonnenen Bittakt darstellendes Bitwechselsignal abgibt und der bei Beginn eines empfangenen Rahmenstartbits (RSB) rücksetzbar ist;
und mit einem Bitlängenspeicher (BLS), dessen Speicherinhalt beim jeweiligen Rahmenstart löschbar ist und in den am Ende des jeweiligen Rahmenstartbits (RSB) der dann erreichte Zählwert des Bitlängenzählers (BLZ) einspeicherbar ist;
wobei der Zählwert des Bitlängenzählers (BLZ) laufend mit dem Bitlängenspeicherwert verglichen wird und der Bitlängenzähler (BLZ) jedesmal dann, wenn er den Bitlängenspeicherwert erreicht, rückgesetzt wird.

8. Interface nach Anspruch 7,
mit einer Rahmenstarterkennungseinrichtung (RSE), mittels welcher der Rahmenstart der jeweils übertragenen Bitfolge erkennbar ist und mittels welcher beim Rahmenbeginn einer Bitfolge der Bitlängenzähler (BLZ) rücksetzbar und der Bitlängenspeicher (BLS) löschbar ist.

9. Interface nach Anspruch 8,
für ein Datennetz, nach dessen Protokoll innerhalb eines Rahmens einer gesendeten Bitfolge nicht mehr als eine vorgeschriebene Anzahl aufeinanderfolgender gleicher Bitlogikwerte vorkommen darf,
wobei die Rahmenstarterkennungseinrichtung (RSE) einerseits mit den am Ausgang des Bitlängenzählers (BLZ) verfügbaren Bittaktimpulsen (BITclk) und andererseits mit der empfangenen Bitfolge (Rx) beaufschlagt wird.

10. Interface, insbesondere nach einem der Ansprüche 1 bis 9,
mit einem Oszillator (VCO) mäßiger Frequenzgenauigkeit, der mittels charakteristischer Größen empfangener Bitfolgen abstimmbar ist und die Taktsteuerung einer zu dem Interface (IF) gehörenden Datenverarbeitungseinrichtung (MC) bestimmt.

11. Interface nach Anspruch 10,
mit einem steuerbaren Oszillator (VCO),
mit einem einen Zähltakteingang aufweisenden Rahmenistlängenzähler (RLZ),
mit einer Rahmensollängevorgabeeinrichtung (RLS),
mit einer Rahmenistlänge und Rahmensollänge miteinander vergleichenden Vergleichseinrichtung (STE),
und mit einer Summierungseinrichtung (S), mittels welcher zu einem eine Sollfrequenz des Oszillators (VCO) vorgebenden Frequenzstellwert das Ausgangssignal (FEHLER) der Vergleichseinrichtung (STE) hinzuaddierbar ist,
wobei ein Ausgang der Summiereinrichtung (S) mit dem Steuereingang des Oszillators (VCO) und ein Oszillatorausgang mit dem Zähltakteingang des Rahmenistlängenzählers (RLZ) gekoppelt ist.

12. Interface nach Anspruch 11,
mit einem zwischen der Vergleichseinrichtung (STE) und der Summiereinrichtung (S) angeordneten freigabeabhängigen Zwischenspeicher (ZS), der einen Freigabeeingang aufweist, bei dessen Beaufschlagung mit einem Freigabesignal eine Übergabe des zwischengespeicherten Vergleichsergebnisses (FEHLER) an die Summiereinrichtung (S) freigegeben wird,
und mit einem Bitzähler (BZ), mittels welchem die Anzahl des ab dem Rahmenstartbit (RSB) einer Bitfolge auftretenden Bits zählbar ist und der beim Erreichen eines vorbestimmten Zählwertes ein Freigabesignal an den Zwischenspeicher (ZS) liefert.

13. Interface nach Anspruch 11 oder 12,
bei welchem zwischen den Oszillatorausgang und den Zähltakteingang des Rahmenistlängenzählers (RLZ) ein Frequenzteiler (FT) geschaltet ist.

14. Datenknoten mit einem Interface (IF) nach einem der Ansprüche 1 bis 13.

15. Datenknoten nach Anspruch 14,
mit einer Datenverarbeitungseinheit (MC), die über das Interface (IF) mit der Busleitung (13) verbunden ist und unter Steuerung durch das Interface (IF) zwischen einem energiesparenden Ruhezustand und einem energieverbrauchenden Aktivzustand umschaltbar ist,
wobei die Datenverarbeitungseinheit (MC) von dem Interface (IF), wenn dieses eine für den betrachteten Datenknoten (DK) bestimmte Aktivierungsadresse erkennt, in den Aktivzustand schaltbar ist.

16. Datenknoten nach Anspruch 15,
bei welchem die Datenverarbeitungseinrichtung (MC) mit einem Mikrocontroller aufgebaut ist.

17. Datenknoten nach Anspruch 15 oder 16,
bei welchem zur Energieversorgung der Datenverarbeitungseinrichtung (MC) ein Spannungsregler (UR) vorgesehen ist, der über einen interfacegesteuerten Schalter an eine Spannungsversorgungsleitung (15) anschaltbar ist.

18. Datenknoten nach einem der Ansprüche 15 bis 17,
bei welcher das Interface (IF) mit einem Weckeingang (WE) versehen ist, über welchen das Interface (IF) mit einem externen Wecksignal (Wext) beaufschlagbar ist, welches unabhängig davon, ob eine für den betrachteten Datenknoten (DK) bestimmte Adresse erkannt worden ist oder nicht, das Umschalten der Datenverarbeitungseinrichtung (MC) in den Aktivzustand bewirkt.

19. Datenknoten nach einem der Ansprüche 14 bis 18,
mit einem Interface nach einem der Ansprüche 10 bis 13, bei welchem die Datenverarbeitungseinrichtung (MC) keinen eigenen Oszillator aufweist und ihre Taktsteuerung mit Hilfe des Ausgangssignals des mittels der empfangenen Bitfolge abgestimmten Oszillators bewirkt wird.

20. Datennetz mit einer Mehrzahl mittels einer Busleitung (13) miteinander verbundener Datenknoten (DK) nach einem der Ansprüche 14 bis 19.
